# EUROPEAN PATENT APPLICATION

(11) **EP 1 873 689 A1**
(43) Date of publication of application: **02.01.2008**
(21) Application number: 07252523.1
(22) Date of filing: 21.06.2007
(51) Int. Cl.: G06K 19/07

(54) **Smart card operating system and operating proces**

(30) Priority: 29.06.2006 CN 200610090151
(71) Applicant: Beijing Watchdata System Co. Ltd., Chaoyang District, Beijing 100015 (CN)
(72) Inventor: Chen, Dacai, Chaoyang District Beijing 100015 (CN); Xu, Daxing, Chaoyang District Beijing 100015 (CN); Qi, Tongxin, Chaoyang District Beijing 100015 (CN)
(74) Representative: Johnson, Terence Leslie

(57) **Abstract**

The present invention relates to a smart card operating system and process, when the system is powered on, the operation mode selecting module judges the power supply manner for the system, and selects a first operation mode when the power is supplied from a non-contact power source, and selects a second operation mode when the power is supplied from a contact power source; in the first operation mode, a command processing module (108) separately processes a non-contact command received by a non-contact communication module (107); in a second operation mode, the command processing module (108) processes in parallel a contact command received by a contact communication module (106) and a non-contact command received by a non-contact communication module (107). The smart card operating system is able to support simultaneously a contact communication and a non-contact communication in use of the technical solution of the present invention, which greatly enhances the application flexibility of the smart card.

## Description

### Technical Field

The present invention relates to the field of smart cards, particularly to a smart card operating system and operating process.

### Background Art

With continuous development of the smart card technology, it is hoped that the smart card is able to incorporate even more multiple and flexible functions. For example, a SIM card may, besides its traditional functions, serve as a payment card, an access card, a clock card and so on, i.e. a true multipurpose card. However, the traditional smart card operating system which only supports a single contact communication mode or a single non-contact communication mode actually hinders flexible application of the smart card.

At present, a smart card operating system supporting a double-interface (contact and non-contact communications) has been developed. However, when this smart card operating system is in the non-contact field of a non-contact terminal device, voltage will be generated by coupling of its antenna, and the system will adopt a single non-contact operation mode to carry out only non-contact communication as is power supplied by the non-contact terminal device; and when this smart card operating system is power supplied by a contact power source, namely, by way of connecting to a power source hardware provided by a contact terminal device, the system will adopt a single contact operation mode to carry out only contact communication. In other words, it is very much limitative because the system can but support one communication mode according to the power supply manner.

### Summary of the Invention

It is an object of the present invention to provide a smart card operating system and process to seek to solve the existent problems concerning the smart card operating system's inability of simultaneously supporting contact and non-contact communications.

In order to solve the above technical problem, the present invention provides a smart card operating system, which comprises a contact communication module, a non-contact communication module and a command processing module, and further comprises a operation mode selecting module connecting said command processing module;

Said operation mode selecting mode determines a first operation mode or a second operation mode according to the power supply manner of said system, and notifies said command processing module;

said command processing module processes separately non-contact commands received by said non-contact communication module on the basis of said first operation mode; or processes in parallel contact commands received by said contact communication module and non-contact commands received by said non-contact communication module on the basis of said second operation mode.

Further, the above system also has the following characteristics: said system further comprises a power source control module connected to said operation mode selecting module, said power source control module detecting available power sources and giving preference to a contact power source for supplying power to the system, and then notifying said operation mode selecting module the determined power supply manner for the system.

Further, the above system also has the following characteristics: said system further comprises a clock control module connected to said command processing module, said clock control module detecting and giving preference to an available clock source according to a preset clock source priority level to provide clock to said command processing module.

Further, the above system also has the following characteristics: said system further comprising an initialization module which in turns comprises a general initialization module, a first operation mode initialization module and a second operation mode initialization module, wherein:
the general initialization module is used for initializing general purpose registers and global variables of the system;
the first operation mode initialization module is used for initializing the non-contact communication module and the command processing module on the basis of said first operation mode;
the second operation mode initialization module is used for initializing the non-contact communication module, contact communication module and the command processing module on the basis of said second operation mode.

Further, the above system also has the following characteristics: said command processing module further comprises a context switching submodule and a first storage submodule,

Said first storage submodule being used for separately saving a contact channel context and a non-contact channel context;

Said context switching submodule being used for choosing the corresponding channel context stored in said first storage submodule in accordance with the channel where a command to be processed is located.

Further, the above system also has the following characteristics: said command processing module further comprising an inquiry submodule for inquiring in parallel whether or not said contact communication module has received a contact command and said non-contact communication module has received a non-contact command.

Further, the above system also has the following characteristics: said contact communication module further comprises a contact communication receiving submodule, a contact communication sending submodule and a contact communication storage submodule, wherein:
said contact communication storage submodule is used for saving a contact command receiving identifier;
said contact communication receiving submodule is used for receiving a contact command, and setting said contact command receiving identifier;
said contact communication sending submodule is used for sending a contact command response, and clearing said contact command receiving identifier.

Further, the above system also has the following characteristics: said non-contact communication module further comprising a non-contact communication receiving submodule, a non-contact communication sending submodule and a non-contact communication storage submodule, wherein:
said non-contact communication storage submodule is used for saving a non-contact command receiving identifier;
said non-contact communication receiving submodule is used for receiving a non-contact command, and setting said non-contact command receiving identifier;
said non-contact communication sending submodule is used for sending a contact command response, and clearing said non-contact command receiving identifier.

Further, the above system also has the following characteristics: said command processing module further comprising a sleep control module for controlling the smart card operating system which is in an idle condition or kept in an idle condition for a set time, into a sleep condition, and for waking up the system based on an interrupt generated by the contact communication module or the non-contact communication module after a command is received.

The present invention also provides a smart card operation process comprising the following steps:
judging a power supply manner for a system when the system is powered on, and selecting a first operation mode when the power is supplied from a non-contact power source; selecting a second operation mode when the power is supplied from a contact power source; and
processing separately a received non-contact command in the first operation mode; and processing in parallel received contact and non-contact commands in the second operation mode.

Further, the above method also has the following characteristics: a contact power source is preferred for power supply to the system when there are non-contact and contact power sources existent at the same time.

Further, the above method also has the following characteristics: a clock source priority is preset, and an available clock source is selected for the system on the basis of said priority when the system is powered on or when the current clock is disappeared yet power sources still exist.

Further, the above method also has the following characteristics: in the second operation mode and before a contact command or a non-contact command is processed, it at first judges whether or not the channel where the command to be processed locates is identical with that supported by the current channel context, and if not, said command is processed after the channel context is switched; otherwise said command is directly processed.

Further, the above method also has the following characteristics: in the second operation mode, a parallel inquiry is carried out of whether or not contact and non-contact commands are received, and the detected contact and non-contact commands are processed.

Further, the above method also has the following characteristics: in the second operation mode:
a contact command identifier or a non-contact command identifier is set when a contact command or a non-contact command is received;
said contact command identifier or a non-contact command identifier is cleared when a response is sent to said contact command or said non-contact command;
a parallel inquiry is carried out to said contact command identifier and said non-contact command identifier to determine whether or not contact and non-contact commands are received, and the detected contact or non-contact command is processed and a corresponding response is sent.

Further, the above method also has the following characteristics: the system is taken into a sleep condition when it is in an idle condition or kept in an idle condition for a set time; and the system is waken up when it receives a command.

The present invention has the following advantages:
In use of the technical solution of the present invention, a smart card operating system can select a single non-contact operation mode or a mixed operation mode based on the selected power supply manner. The system in a single non-contact operation mode separately processes the received non-contact commands; the system in a mixed operation mode can support simultaneously both contact and non-contact communication operations and keep these two communication manners in correct operation yet is out of influence by one another, whereby the flexibility of application of the smart card is very much enhanced.

### Description of the Drawings, all of which are schematic:

Fig. 1 is a diagram of the smart card operating system in examples of the present invention;
Fig.2 is a diagram of the initialization module in examples of the present invention;
Fig. 3 is a diagram of the command processing module in examples of the present invention;
Fig. 4 is a flow chart of the single non-contact operation mode in examples of the present invention;
Fig. 5 is a diagram of the contact communication module in examples of the present invention;
Fig. 6 is a diagram of the non-contact communication module in examples of the present invention;
Fig. 7 is a flow chart of the command processing module processing a command in a mixed operation mode in examples of the present invention.

### Preferred Embodiments of the Invention

Hereinafter the present invention is further described by reference to the drawings and examples.

The smart card operating system in the present embodiment defines two operation modes: a single non-contact operation mode and a contact and non-contact mixed operation mode (hereinafter referred to as the mixed operation mode for short). When being power supplied from a non-contact power source from a non-contact terminal device, the system will take the single non-contact operation mode to carry out a non-contact communication; but when obtaining power from a contact power source by means of a contact terminal device, the system will take the mixed operation mode which supports simultaneously the contact and non-contact communications.

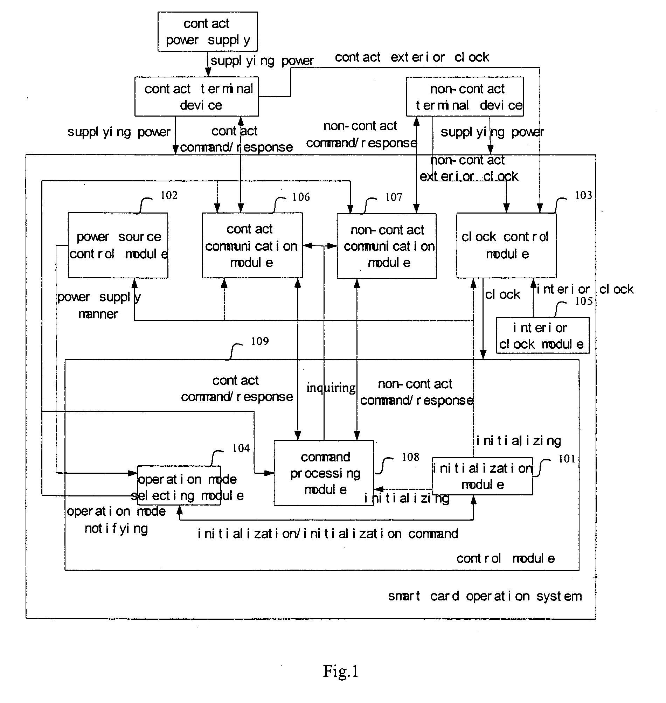

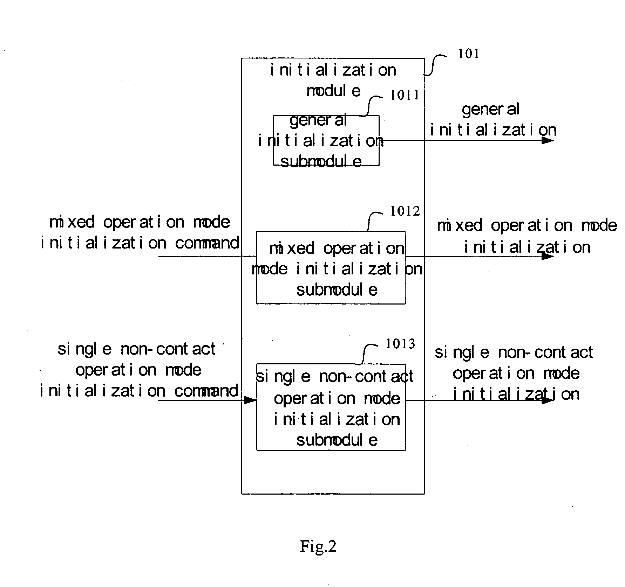

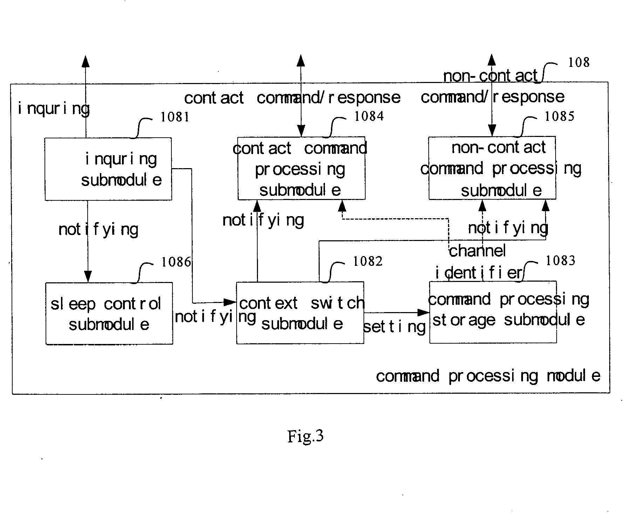

In Fig. 1, the smart card operating system comprises a power source control module 102, a clock control module 103, an interior clock module 105, a contact communication module 106, a non-contact communication module 107 and a control module 109, wherein the control module 109 comprises in turn an initialization module 101, an operation mode selecting module 104 and a command processing module 108. The initialization module 101, as shown in Fig. 2, in turn comprises a general initialization submodule 1011, a mixed operation mode initialization submodule 1012 and a single non-contact operation mode initialization submodule 1013. The command processing module 108, as shown in Fig. 3, in turn comprises an inquiry submodule 1081, a context switching submodule 1082, a command processing storage submodule 1083, a contact command processing submodule 1084, a non-contact command processing submodule 1085 and a sleep control submodule 1086.

In the present embodiment, the non-contact communication module 107 complies with ISO14443-3/4 standard and supports Type A and Type B protocols; the contact communication module 106 complies with ISO7816-3/4 standard and supports T=0/T=1 protocols.

In the present embodiment, the channels which are respectively used by contact communication and non-contact communication are independent. It is because contact data and non-contact data may arrive at the same time during the contact and non-contact communications, and thus it can be secured that all the data is correctly received if the contact and non-contact communications respectively use independent channels. The contact data channel adopts the pin C7 as defined in 7816 standard, and the non-contact data channel adopts the untapped pins C4 and C8 reserved in 7816 standard. This is designed for guaranteeing coincidence with the existent standards. -

When the smartcard operating system is powered on:
The general initialization submodule 1011 initializes the general registers of the system and global variables;
As general initialization is a conventional work necessary for normal operation of a smart card operating system, it will not be described in detail. In the present embodiment, particularly during general initialization:
a contact power source is referred to serving as the power source for initializing the power source control module 102 ;
the priority ordering of clock sources during initialization of the clock control module 103 is at first a contact exterior clock source, and then a non-contact exterior clock source and lastly an interior clock source;
the operation mode selecting module 104 is initialized;
the contact channel context in the command processing module 108 is initialized;
the non-contact channel context in the command processing module 108 is initialized;
the current channel context in the command processing module 108 is set as a contact channel context;
the channel identifier in the command processing module 108, which is used for identifying the current operation channel, is set as a contact channel;
the contact command identifier in the contact communication module 106 is set as 0, in which said contact command identifier is used for identifying whether or not a contact command is received, initialization of the contact command identifier as 0 representing that no contact command is received;
the non-contact command identifier in the non-contact communication module 107 is set as 0, in which the non-contact command identifier is used for identifying whether or not a non-contact command is received, initialization of the non-contact command identifier as 0 representing that no non-contact command is received.

After initialization of the smart card operating system:
**A1.** the clock control module 103 detects in accordance with the set clock source priority relationship and selectively outputs the available clock source for the control module.
   The clock sources may be divided into exterior clock sources and interior clock sources as distinguished from the input, wherein the exterior clock sources are in turns divided as contact exterior clock sources and non-contact exterior clock sources that are respectively provided by contact terminal devices and non-contact terminal devices; and the interior clock sources are provided by the interior clock module 105 in the smart card operating system. There may be no exterior clock sources, but the interior clock sources are always existent except when the system is in the sleep condition.
   The function of the clock control module 103 is to select, in accordance with the set clock source priority relationship, a currently existent clock source from the exterior clock sources (there may only exist contact exterior clocks or non-contact exterior clocks, or both of them at the same time) and the interior clock sources to provide an operation clock for the control module 109.
   When the system is powered on or when power sources exist yet the current work clock of the control module 109 abruptly disappears, the clock control module 103 detects and then selects an available clock source for the control module 109 in accordance with the set clock source priority relationship.
   The above-mentioned set priority relationship can be correspondingly adjusted if practically necessary. The priority relationship in the present embodiment is so determined that the stablest contact exterior clock source is preferred to serve as the operation clock source for the system when contact exterior clock sources are provided. As to the interior clock source, it always exists when the system is not in a sleep condition and thus is convenient to some degree, yet is subject to rather high power consumption which is adverse to the smart card operating system, therefore, its priority is set as the lowest.
**A2**. the power source control module 102 detects the power supply manner of the system, and will directly notifies the operation mode selecting module 104 the power supply manner when there is mere an existent single non-contact power source or a single contact power source for the system. If there are non-contact and contact power sources at the same time, one of them will be selected by the system in accordance with the preset power source priority relationship and the selected power supply manner will be notified to the operation mode selecting module 104.
   When there are non-contact and contact power sources at the same time, the power source control module 102 will choose one of them for the system. This can prevent a chip from abnormity (for example, the chip is reset again) resulted from simultaneous power supply by two power sources to the system.
   On the ground that the contact power source has relative sufficient and stable energy, and the system with a contact power supply can process in parallel contact and non-contact commands when the operation mode selecting module 104 chooses a mixed operation mode, therefore, the contact power source is preferred in the present embodiment. When the system operates in a single non-contact operation mode, the power source control module 102 will choose the contact power source for the system and notify the operation mode selecting module 104 if there is provided any available contact power source for the system detected by the power source control module 102.
   The operation mode selecting module 104 selects the operation mode of the system based on the power supply manner notified from the power source control module 102. When a non-contact power supply manner is notified by the power source control module 102, the operation mode selecting module 104 will choose the single non-contact operation mode for the system and when a contact power supply manner is notified by the power source control module 102, the operation mode selecting module 104 will choose the mixed operation mode for the system. Detailed explanation will be given as follows by reference to the selected operation mode:

### I. Single Non-contact Operation Mode

After selecting for the system the single non-contact operation mode, the operation mode selecting module 104 sends a single non-contact operation mode initialization command to the single non-contact operation mode initialization submodule 1013 which will carry out single non-contact operation mode initialization to the non-contact communication module 107 and command processing module 108. Namely, the single non-contact operation mode initialization submodule 1013 will respectively:
**B1.** set the registers in the non-contact communication module 107 that are required for a non-contact communication, and command the non-contact communication module 107 to receive and send in the interruption manner, and command the non-contact communication module 107 to generate an interrupt to notify the command proceeding module 108 after it has received a non-contact command;
**B2.** set the current channel context in the command processing module 108 as a non-contact channel context, and set the channel identifier as a non-contact channel, and then notify the command processing module 108 to take the single non-contact operation mode.

When the command processing module 108 operates in the single non-contact operation mode, namely, after the single non-contact operation mode initialization of the non-contact communication module 107 and the command processing module 108 by the single non-contact operation mode initialization submodule 1013, the sleep control submodule 1086 lets the system enter into a sleep condition and wait the non-contact communication module 107 to generate an interrupt; after generation of an interrupt by the non-contact communication module 107 the sleep control submodule 1086 wakes up the system to notify the non-contact command processing submodule 1085 to process the contact command, the non-contact command processing submodule 1085 sending a response to the non-contact communication module 107 after the non-contact command has been processed and waiting for a set time after sending of the response, if the non-contact communication module 107 generates an interrupt again during this set time, processing of non-contact command being continued by the non-contact command processing submodule 1085, otherwise it notifies the sleep control submodule 1086 to let the system enter into the sleep condition, and then wait for the next interrupt generated by the non-contact communication module 107 (the non-contact command processing submodule 1085 may also notify immediately the sleep control submodule 1086 to let the system enter into the sleep condition after having sent the response, and wait the non-contact communication module 107 to generate a next interrupt).

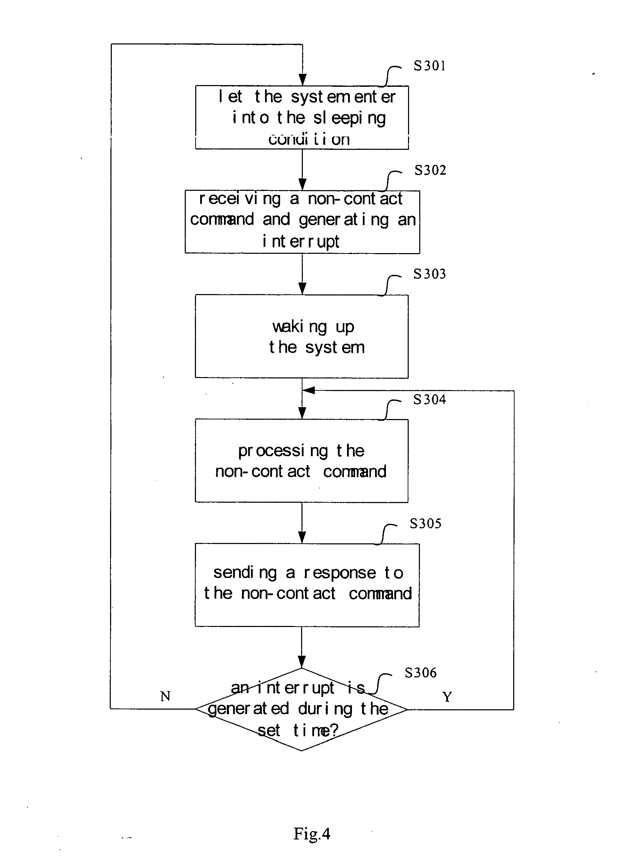

Thus it can be seen, when the system operates in the single non-contact operation mode, the following steps are included as shown in Fig. 4:
Step 301, the sleep control submodule 1086 directing the system into the sleep condition and waiting for an interrupt generated by the non-contact communication module 107;
Step 302, the non-contact communication module 107 receiving a non-contact command and generates an interrupt to notify the sleep control submodule 1086;
Step 303, the sleep control submodule 1086 waking up the system and notifying the non-contact command process submodule 1085 to process the non-contact command;
Step 304, the non-contact command processing submodule 1085 reading and processing the non-contact command based on the clock provided by the clock control module 103;
Step 305, the non-contact command processing submodule 1085 sending to the non-contact communication module 107 a response of the non-contact command;
Step 306, the non-contact command processing submodule 1085 waiting for a set time, and backing to Step 304 if the non-contact communication module 107 generates an interrupt again in the set time; otherwise notifying the sleep control submodule 1086 and backing to Step 301.

### II. Mixed Operation Mode

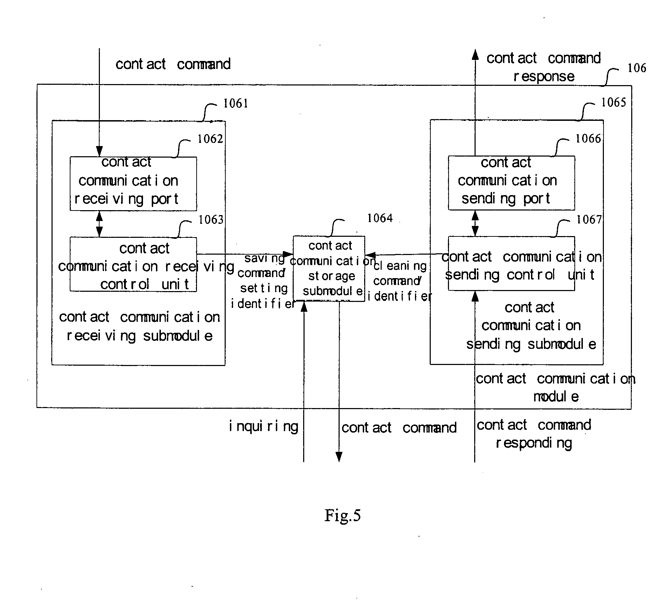

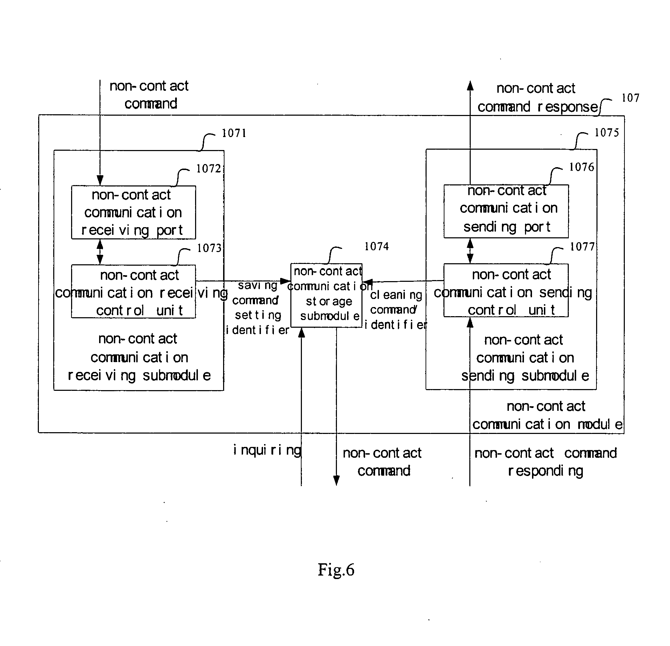

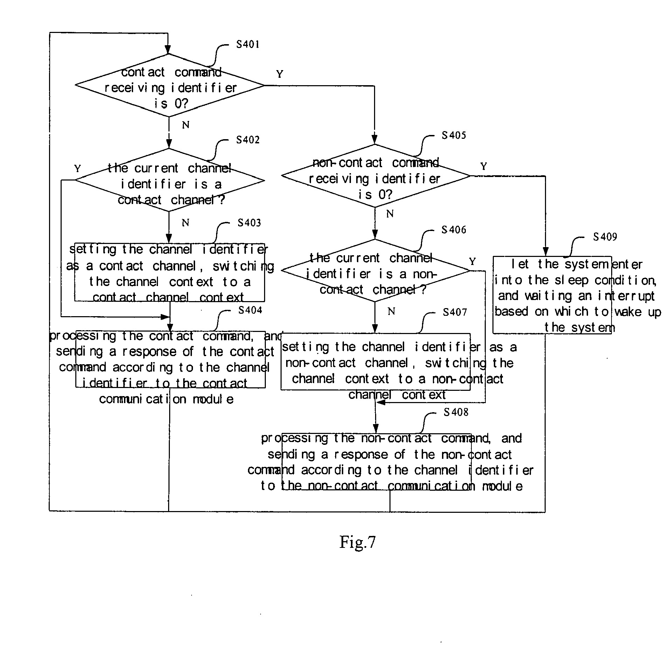

After the operation selecting mode 104 selected the mixed operation mode for the system, it sends a mixed operation mode initialization command to the mixed operation mode initialization submodule 1012 which will then carry out a mixed operation mode initialization to the contact communication module 106, the non-contact communication module 107 and the command processing module 108, namely, the mixed operation mode initialization submodule 1012 will respectively:
**C1.** set the registers in the contact communication module 106 that are required for a contact communication, command the contact communication module 106 to receive in the interruption manner and send in the polling manner and operate in the mixed operation mode, then send a contact reset answering to the contact terminal device supplying power to the system;
   In the present embodiment, the contact communication mode 106 is commanded to receive in the interruption manner and send in the polling manner during the mixed operation mode initialization, however in practical application, the operation manners adopted for receiving and sending the contact data are not limited. The contact communication module 106 may send and receive in the interruption manner or the polling manner. As shown in Fig. 5, the contact communication module 106 further comprises a contact communication receiving submodule 1061, a contact communication storage submodule 1064 and a contact communication sending submodule 1065, wherein:
   the contact communication receiving submodule 1061 further comprises a contact communication receiving port 1062 and a contact communication receiving control unit 1063, the contact communication receiving module 1061 having the following two operation manners:
      Polling Manner: the contact communication receiving control unit 1063 continuously detecting whether there is data arriving at the contact communication receiving port 1062, if the data is detected, the contact communication receiving control unit 1063 will save the detected data at the designated address in the contact communication storage submodule 1064;
      Interruption Manner: after the data has been received by the contact communication receiving pot 1062, it generates an interrupt to notify the contact communication receiving control unit 1063 to save the data at the designated address in the contact communication storage submodule 1064.
   Due to the reason that the contact communication receiving port 1062 may only receive a limited number of bytes and the number may be lower than that of a contact command, for example, a contact command includes five bytes, however, the contact communication receiving port 1062 can only receive one byte each time, so if the data is received in the polling manner, it will be possible that a byte cannot be taken away as soon as it arrives, and then it will be negated by the following one. It can guarantee the system receive the contact command correctly with the interruption manner regardless of the condition of the system. Therefore, in the present embodiment, the contact communication receiving submodule 1061 adopts the interruption manner, yet is not limited for serving as a mere operation manner for receiving contact data in a practical application.
   When the contact communication module 106 operates in the mixed operation mode, the contact communication receiving control unit 1063 generates an interrupt to notify the command processing module 108 after it received a contact command (the purpose for generation of an interrupt is that if the system is in the sleep condition at this time, the command processing module 108 will wake up the system based on this interrupt, and it will not begin to process the received contact command owing to this interrupt under the mixed operation mode), and sets the contact command identifier in the contact communication storage submodule 1064 as 1 to identify that a contact command has been received.
   The contact communication sending submodule 1065 which further comprises a contact communication sending port 1066 and a contact communication sending control unit 1067, has the following two operation manners:
   Polling Manner: the contact communication sending control unit 1067 takes the contact data to be sent to the contact communication sending port 1066, and then continuously detects the contact communication sending port 1066 until the data has been sent out;
   Interruption Manner: the contact communication sending control unit 1067 takes the contact data to be sent to the contact communication sending port 1066, and the contact communication sending port 1066 generates an interrupt to notify the contact communication sending control unit 1067 after it has sent out the data.
   In the present embodiment, the contact communication sending submodule 1065 adopts the polling manner, yet is not limited for serving as a mere operation manner for sending contact data in practical application.
   When the contact communication module 106 operates at the mixed operation mode, the contact communication sending control unit 1067 will clear, after sending a response to the contact command, the contact command in the contact communication storage submodule 1064 and the contact command identifier.
C2. set the registers in the non-contact communication 107 which are required for a non-contact communication, and command the non-contact communication module 107 to receive and send in the interruption manner and operate in the mixed operation mode;
   In the present embodiment, the non-contact communication module 107 is commanded to receive and send in the interruption manner during the mixed operation mode initialization, however, is not limited for serving as the mere operation manner for receiving non-contact data in practical application. The non-contact communication module 107 may receive and send in the interruption manner or the polling manner. As shown in Fig. 6, the non-contact communication mode 107 further comprises a non-contact communication receiving submodule 1071, a non-contact communication storage submodule 1074 and a non-contact communication sending submodule 1075, wherein:
   the non-contact communication receiving submodule 1071 which further comprises a non-contact communication receiving port 1072 and a non-contact communication receiving control unit 1073, has the following two operation manners:
      Polling Manner: the non-contact communication receiving control unit 1073 continuously detects the non-contact communication receiving port 1072 whether or not there is data arriving and if yes, saves the data at the designated address in the non-contact communication storage submodule 1074;
      Interruption Manner: when there is data arriving at the non-contact communication receiving port 1072, it generates an interrupt to notify the non-contact communication receiving control unit 1073 to save the data t the designated address in the non-contact communication storage submodule 1074.
   In the present embodiment, the non-contact communication receiving submodule 1071 adopts the interruption manner, yet is not limited for serving as a mere operation manner for receiving non-contact data in practical application.
   When the non-contact communication module 107 operates at the mixed operation mode, the non-contact communication receiving control unit 1073 receives a non-contact command and then generates an interrupt to notify the command processing module 108 (the purpose for generation of an interrupt is that if the system is in the sleep condition at this time, the command processing module 108 will wake up the system based on this interrupt, and it will not begin to process the received non-contact command owing to this interrupt under the mixed operation mode), and sets the non-contact command identifier as 1 to identify that a non-contact command has been received.
   The non-contact communication sending submodule 1075 which further comprises a non-contact communication sending port 1076 and a non-contact communication sending control unit 1077, has the following two operation manners:
   Polling Manner: the non-contact communication sending control unit 1077 takes the non-contact data to be sent to the non-contact communication sending port 1076, and then continuously detects whether or not the data has been sent out;
   Interruption Manner: the non-contact communication sending control unit 1077 takes the non-contact data to be sent to the non-contact communication sending port 1076, and the non-contact communication sending port 1076 will generate an interrupt to notify the non-contact communication sending control unit 1077 after it has sent out the data.
   In the present embodiment, the non-contact communication sending submodule 1075 adopts the interruption manner, however is not limited for serving as a mere operation manner for receiving non-contact data in practical application.
   When the non-contact communication module 107 operates at the mixed operation mode, the non-contact communication sending control unit 1077 will clear, after sending a response to the non-contact command, the non-contact command and the non-contact command identifier in the non-contact communication storage submodule 1074.
C3. notify the command processing module 108 to take the mixed operation mode and then the command processing module 108 takes the mixed operation mode.
   The command processing module 108 will process in virtue of the following steps as shown in Fig.7 after being notified to take the mixed operation mode:
   Step S401, the inquiry submodule 1081 inquiring whether or not the saved contact command receiving identifier in the contact communication storage submodule 1064 is 0, and if yes, advancing to Step S405, otherwise to Step S402;
   Step S402, the inquiry submodule 1081 notifying the context switching submodule 1082 that the command communication module 106 has received a contact command and the context switching submodule 1082 judges whether or not the saved channel identifier in the command processing storage submodule 1083 is a contact channel, if yes, advancing to Step S404, or otherwise the channel identifier is a non-contact channel, advancing to Step S403;
   Step S403, the context switching submodule 1082 setting the channel identifier as a contact channel, and switching the channel context to a contact channel context;
      Wherein switching the channel context to a contact channel context means that the current channel context, i.e. the non-contact channel context, is saved in the command processing storage submodule 1083 which then uses the saved contact channel context to update the current channel context.
   Step S404, the context switching submodule 1082 notifying the contact command processing submodule 1084 that the command communication module 106 has received a contact command; the contact command processing submodule 1084 reading the contact command from the contact communication storage submodule 1064 and processing it, and then sending a response of the contact command to the contact communication module 106 according to the channel identifier in the command processing storage submodule 1083 and backing to Step S401;
   Step S405, the inquiry submodule 1081 inquiring whether or not the saved non-contact command receiving identifier in the non-contact communication storage submodule 1074 is 0, and if yes, advancing to Step S409, otherwise advancing to Step S406;
   Step S406, the inquiry submodule 1081 notifying the context switching submodule 1082 that the non-contact communication module 107 has received a non-contact command, the context switching submodule 1082 judging whether or not the saved channel identifier in the command processing storage submodule 1083 is a non-contact channel, and if yes, advancing to Step S408, or otherwise the channel identifier is a contact channel, advancing to Step S407;
   Step S407, the context switching submodule 1082 setting the channel identifier as a non-contact channel and switching the channel context to a non-contact channel context;
      Switching the channel context to a non-contact channel context means that the current channel context, i.e. the contact channel context, is saved in the command processing storage submodule 1083 which will then uses the saved non-contact channel context to update the current channel context.
   Step S408, the context switching submodule 1082 notifying the non-contact command processing submodule 1085 that the non-contact communication module 107 has received a non-contact command, the non-contact command processing submodule 1085 reading the non-contact command from the non-contact communication storage submodule 1074 and processing it, and sending a response of the non-contact command to the non-contact communication module 107 according to the channel identifier and backing to Step S401;
   Step S409, the inquiry submodule 1081 notifying the sleep control submodule 1086 that there is no command to be processed at present, and then the sleep control submodule 1086 directing the system into the sleep condition and waiting an interrupt generated by the contact communication module 106 or non-contact communication module 107 to wake up the system on the basis of this interrupt, and backing to Step S401 after the system is woken up.
   During the above procedure, it may also inquiry the submodule 1081 whether or not the non-contact command receiving command identifier is 0, and if yes, then inquiry again whether or not the contact command receiving identifier is 0. Concrete operations depend on practical requirements.
   During practical application, the contact communication module 106 and the non-contact communication module 107 may not set the contact command receiving identifier and the non-contact command receiving identifier, respectively, and the inquiry submodule 1081 inquiries, directly at the designated addresses for saving the contact command and the non-contact command in the contact communication storage submodule 1064 and the non-contact communication storage submodule 1074, whether or not the contact and non-contact commands are saved, and if yes, notifies the contact command processing submodule 1084 to read and process the detected commands, wherein separate processing of the contact and non-contact commands can be achieved.
   In the present embodiment, for the sake of energy saving, the command processing module 108 let the system enter into the sleep condition when it fails to find any contact command receiving identifier or non-contact command receiving identifier. However, in practical application, the system may also not be commanded to enter into the sleep condition while the command processing module 108 keeps inquiry the contact command receiving identifier and the non-contact command receiving identifier.
   Obviously, a person skilled in the art can make various changes and modifications to the present invention while not deviating away from the spirit and scope of the present invention. In this way, if these changes and modifications to the present invention fall within the claims and the equivalent technical scope, they shall be as well intended to be contained by the present invention.

## Claims

1. A smart card operating system, comprising:
a contact communication module, a non-contact communication module and a command processing module, **characterized in that**, it further comprises an operation mode selecting module connecting said command processing module;
said operation mode selecting module determines a first operation mode or a second operation mode according to the power supply manner of said system, and notifies said command processing module;
said command processing module processes separately non-contact commands received by said non-contact communication module on the basis of said first operation mode; or processes in parallel contact commands received by said contact communication module and non-contact commands received by said non-contact communication module.

2. A system according to claim 1, **characterized in that** said system further comprises a power source control module connected to said operation mode selecting module, said power source control module detecting available power sources and giving preference to a contact power source for supplying power to the system, and then notifying said operation mode selecting module the determined power supply manner for the system.

3. A system according to claim 1 or claim 2, **characterized in that** said system further comprises a clock control module connected to said command processing module, said clock control module detecting and giving preference to an available clock source according to a preset clock source priority level to provide clock to said command processing module.

4. A system according to any preceding claim, **characterized in that** said system further comprising an initialization module which in turns comprises a general initialization module, a first operation mode initialization module and a second operation mode initialization module, wherein:
the general initialization module is used for initializing general purpose registers of the system and global variables;
the first operation mode initialization module is used for initializing the non-contact communication module and the command processing module on the basis of said first operation mode;
the second operation mode initialization module is used for initializing the non-contact communication module, the contact communication module and the command processing module on the basis of said second operation mode.

5. A system according to any preceding claim, **characterized in that** said command processing module further comprises a context switching submodule and a first storage submodule,
said first storage submodule being used for separately saving a contact channel context and a non-contact channel context;
said context switching submodule being used for choosing the corresponding channel context saved in said first storage submodule in accordance with the channel where a command to be processed is located.

6. A system according to claim 5, **characterized in that** said command processing module further comprises an inquiry submodule for inquiring in parallel whether or not said contact communication module has received a contact command and said non-contact communication module has received a non-contact command.

7. A system according to any preceding claim, **characterized in that** said contact communication module further comprises a contact communication receiving submodule, a contact communication sending submodule and a contact communication storage submodule, wherein:
said contact communication storage submodule is used for saving a contact command receiving identifier;
said contact communication receiving submodule is used for receiving a contact command, and setting said contact command receiving identifier;
said contact communication sending submodule is used for sending a response to the contact command, and clearing said contact command receiving identifier.

8. A system according to any preceding claim, **characterized in that** said non-contact communication module further comprises a non-contact communication receiving submodule, a non-contact communication sending submodule and a non-contact communication storage submodule, wherein:
said non-contact communication storage submodule is used for saving a non-contact command receiving identifier;
said non-contact communication receiving submodule is used for receiving a non-contact command, and setting said non-contact command receiving identifier;
said non-contact communication sending submodule is used for sending a contact command response, and clearing said contact command receiving identifier.

9. A system according to any preceding claim, **characterized in that** said command processing module further comprises a sleep control module for controlling the smart card operating system which is in an idle condition or kept in an idle condition for a set time, into a sleep condition, and for waking up the system based on an interrupt generated by the contact communication module or the non-contact communication module after a command is received.

10. A smart card operation process, comprising the following steps:
judging a power supply manner for a system when the system is powered on, and selecting a first operation mode when the power is supplied from a non-contact power source; selecting a second operation mode when the power is supplied from a contact power source; and
processing separately a received non-contact command in the first operation mode; processing in parallel received contact and non-contact commands in the second operation mode.

11. A process according to claim 10, **characterized in that** a contact power source is preferred for serving as the power supply to the system when there are non-contact and contact power sources existent at the same time.

12. A process according to claim 10 or claim 11, **characterized in that** a clock source priority level is preset, and an available clock source is selected for the system on the basis of said priority level when the system is powered on or when the current clock is disappeared yet power sources still exist to provide a clock to the system.

13. A process according to any of claims 10 to 12, **characterized in that** in the second operation mode and before a contact command or a non-contact command is processed, it at first judges whether or not the channel where the command to be processed locates is identical with that supported by the current channel context, and if not, said command is processed after the channel context is switched; otherwise said command is directly processed.

14. A process according to claim 10, **characterized in that** in the second operation mode, a parallel inquiry is carried out of whether or not contact and non-contact commands are received, and the detected contact and non-contact commands are processed.

15. A process according to claim 10, **characterized in that** in the second operation mode:
a contact command identifier or a non-contact command identifier is set when a contact command or a non-contact command is received;
said contact command identifier or a non-contact command identifier is cleared when a response is sent to said contact command or said non-contact command;
a parallel inquiry is carried out to said contact command identifier and said non-contact command identifier to determine whether or not contact and non-contact commands are received, and the detected contact or non-contact command is processed and a corresponding response is sent.

16. A process according to any of claims 10 to 15, **characterized in that** the system is taken into a sleep condition when it is in an idle condition or kept in an idle condition for a set time; and the system is waken up when it receives a command.
